# EUROPÄISCHE PATENTANMELDUNG

(11) **EP 2 669 595 A2**
(43) Veröffentlichungstag der Anmeldung: **04.12.2013**
(21) Anmeldenummer: 13168505.9
(22) Anmeldetag: 21.05.2013
(51) Int. Cl.: F24J 2/52

(54) **Befestigungsvorrichtung für Solarpaneele**

(30) Priorität: 01.06.2012 DE 102012209272
(71) Anmelder: HILTI Aktiengesellschaft, 9494 Schaan (LI)
(72) Erfinder: Kemple, Lorcan, 6971 Hard (AT); Mundwiler, Lukas, 9473 Gams (CH)

(57) **Zusammenfassung**

Die Erfindung betrifft eine Befestigungsvorrichtung (2) zum Befestigen zumindest eines Solarpaneels (4) an einer Montageschiene (1), welche einen von zwei parallelen Stegen (11,12) begrenzten Schlitz (10) aufweist, mit einem Rastelement (20) mit zwei Rasthaken (21,22) welche unter elastischer Deformation zumindest eines Teils des Rastelements (20) in den Schlitz (10) einbringbar sind, und welche anschliessend bei Entspannung des Rastelements (20) die Stege (11,12) der Montageschiene (1) hintergreifen können, und zumindest einem Niederhalter (50) für ein Solarpaneel (4), welcher mit dem Rastelement (20) verbunden ist. Erfindungsgemäss ist vorgesehen, dass zumindest ein Verrieglungselement (41,42) vorgesehen ist, welches in eine Verrieglungsposition zwischen den beiden Rasthaken (21,22) eingeschoben werden kann, in der das Verrieglungselement (41,42) eine Annäherung der beiden Rasthaken (21,22) aneinander hemmt.

## Beschreibung

Die Erfindung betrifft eine Befestigungsvorrichtung zum Befestigen zumindest eines Solarpaneels an einer Montageschiene, welche einen von zwei parallelen Stegen begrenzten Schlitz aufweist, gemäss dem Oberbegriff des Anspruchs 1. Eine solche Befestigungsvorrichtung ist ausgestattet mit einem Rastelement mit zwei Rasthaken, welche unter elastischer Deformation zumindest eines Teils des Rastelements in den Schlitz einbringbar sind, und welche anschliessend bei Entspannung des Rastelements die Stege der Montageschiene hintergreifen können, und zumindest einem Niederhalter für ein Solarpaneel, welcher mit dem Rastelement verbunden ist.

Aus der EP 1 767 793 A2 sind Befestigungsvorrichtungen für Solarpaneele bekannt, die in den Schlitz einer Profilschiene eingeklickt werden können. Ein weiteres Einklicksystem ist aus der WO 2007/143983 A2 bekannt.

Aufgabe der Erfindung ist es, eine einklickbare Befestigungsvorrichtung anzugeben, welche bei besonders hohe Zuverlässigkeit und niedrigem Aufwand besonders vielseitig einsetzbar ist.

Die Aufgabe wird erfindungsgemäss durch eine Befestigungsvorrichtung mit den Merkmalen des Anspruchs 1 gelöst. Bevorzugte Ausführungsformen sind in den abhängigen Ansprüchen angegeben.

Eine erfindungsgemässe Befestigungsvorrichtung ist dadurch gekennzeichnet, dass zumindest ein Verrieglungselement vorgesehen ist, welches in eine Verrieglungsposition zwischen den beiden Rasthaken eingeschoben werden kann, in der das Verrieglungselement eine Annäherung der beiden Rasthaken aneinander hemmt.

Bei einer erfindungsgemässen Befestigungsvorrichtung ist ein Rastelement mit zwei gegenüberliegenden Rasthaken vorgesehen, welche in den Schlitz der Montageschiene einklickbar sind. Hierfür sind die Rasthaken so bemessen und angeordnet, dass sie beim Einschieben in den Schlitz unter elastischer Deformation des Rastelements vorübergehend zusammengedrückt werden können, insbesondere durch manuelles Zusammenpressen der Rastelemente oder/und von den Stegen der Montageschiene, die gegen die Rasthaken wirken. Sobald die Rastnasen der Rasthaken an den Stegen vorbei in das Schieneninnere gelangt sind, kann sich das Rastelement wieder entspannen und die elastische Deformation kann sich zumindest teilweise wieder abbauen. Die Rasthaken entfernen sich dabei wieder voneinander, bis sie die Stege der Montageschiene hintergreifen und gegebenenfalls auch an den Stegen anliegen. Da die Rasthaken widerhakenartig ausgeführt sind, ist das Rastelement in diesem eingeklickten Zustand formschlüssig an den Stegen der Montageschiene gegen ein herausziehen in Richtung quer zur Längserstreckung der Schiene und/oder quer zur Längserstreckung des Schlitzes gesichert.

Ein Grundgedanke der Erfindung kann in einem Verrieglungselement gesehen werden, welches, nachdem die Rasthaken in den Schlitz der Montageschiene eingeklickt worden sind, in eine Verrieglungsposition zwischen den beiden Rasthaken eingebracht werden kann. In dieser Verrieglungsposition behindert das Verrieglungselement eine Annäherung der beiden Rasthaken aneinander, oder kann die Annäherung auch komplett blockieren, so dass eine Annäherung zumindest erschwert ist. Da eine Annäherung der beiden Rasthaken aneinander aber nötig ist, um die Rasthaken wieder aus dem Schlitz zu entfernen, bildet das Verrieglungselement in der Verrieglungsposition zum einen eine Sicherung gegen ein unerwünschtes Herausziehen des Rastelements aus der Montageschiene. Zum anderen kann das Verrieglungselement aber auch mit Übermass dimensioniert, d.h. breiter als der Spalt zwischen den Rasthaken ausgeführt werden, so dass das Verrieglungselement in der Verrieglungsposition die beiden Rasthaken auseinanderdrückt und gegen die beiden Stege der Montageschiene presst. In diesem Fall kann das Verrieglungselement die Reibung der Rasthaken an den Stegen der Montageschiene erhöhen und das Rastelement somit gegen eine Verschiebung längs des Schlitzes in der Montageschiene sichern.

Insbesondere kann somit ein Vormontagezustand realisiert werden, bei der das Rastelement zwar in den Schlitz eingeklickt ist, bei der das Rastelement aber aufgrund eines Spiels zwischen den Rasthaken und den Stegen der Montageschiene relativ leicht längs des Schlitzes verschiebbar ist. Erst wenn das Verrieglungselement in die Verrieglungsposition gebracht ist, werden die Rasthaken an die Stege angepresst und somit gegen eine Längsverschiebung gesichert.

Besonders bevorzugt ist es, dass eine Auflageplatte vorgesehen ist, vorzugsweise zur zumindest mittelbaren, insbesondere zur unmittelbaren Auflage auf der Montageschiene, und dass das Verrieglungselement an der Auflageplatte angeordnet ist. Durch Integration in eine solche Platte kann das Verrieglungselement vom Monteur besonders einfach und sicher positioniert werden.

Weiterhin ist es vorteilhaft, dass die Auflageplatte zumindest eine Ausnehmung, insbesondere einen Einschnitt oder ein Loch aufweist, welche das Rastelement umgibt, insbesondere wenn sich das Verrieglungselement in der Verrieglungsposition befindet. Hierdurch kann die Zuverlässigkeit noch weiter erhöht werden. Denn die Wände der Ausnehmung können einen Anschlag bilden, welcher eine Bewegung der Auflageplatte relativ zum Rastelement und damit eine Bewegung des Verrieglungselements relativ zu den Rasthaken begrenzen und folglich ein versehentliches Herausziehen des Verrieglungselements aus der Verrieglungsposition verhindern kann. Unter einem Einschnitt wird insbesondere eine Ausnehmung verstanden, die zum Rand der Platte hin offen ist, während unter einem Loch eine Ausnehmung verstanden werden kann, die eine geschlossene, ringförmige Wand aufweist und/oder die von der Auflageplatte ringförmig umgeben ist. Das Loch kann vorzugsweise einen mehrkantigen, insbesondere rechteckigen, bevorzugt quadratischen Querschnitt aufweisen, was die Positionierung vereinfachen kann. Es kann auch vorgesehen sein, das Rastelement bereits vor dem Einklicken des Rastelements in die Montageschiene in die Ausnehmung der Auflageplatte einzuführen, wodurch z. B. eine Verliersicherung gegeben sein kann.

Besonders bevorzugt ist es, dass das Verrieglungselement in die Ausnehmung ragt. Hierdurch wird eine besonders kompakte und zuverlässige Konstruktion erreicht.

Eine weitere vorteilhafte Ausgestaltung liegt darin, dass das Verrieglungselement in der Verrieglungsposition zwischen die beiden Stege der Montageschiene ragt. In dieser Lage kann das Verrieglungselement die Rasthaken besonders wirksam sichern und gegebenenfalls an die Stege anpressen. Insbesondere vor diesem Hintergrund kann es vorteilhaft sein, dass die Auflageplatte eine Auflageebene zur zumindest mittelbaren, vorzugsweise unmittelbaren, Auflage auf der Montageschiene, insbesondere auf die Stege der Montageschiene, aufweist, und dass das Verrieglungselement von der Auflageplatte über die Auflageebene vorsteht. Das Verrieglungselement verläuft vorzugsweise stumpfwinklig zur Auflageebene und/oder steht stumpfwinklig von der Auflageplatte ab, was das insbesondere das Einführen erleichtern kann. Der Winkel liegt hierbei bevorzugt zwischen 170° und 110°.

Weiterhin ist es vorteilhaft, dass die Auflageplatte zwei Verrieglungselemente aufweist, die auf gegenüberliegenden Seiten der Auflageplatte von der Auflageplatte vorstehen. Dies kann die Zuverlässigkeit weiter erhöhen, da die Auflageplatte hierbei ohne Funktionalitätsverlust in zwei Orientierungen angebracht werden kann, d.h. es kommt nicht darauf an, ob der Monteur die Platte mit der Oberseite oder mit der Unterseite auf die Montageschiene auflegt. Insbesondere kann die Auflageplatte achssymmetrisch sein, was die Zuverlässigkeit noch weiter verbessern kann, wobei die Achssymmetrie bevorzugt zu einer Symmetrieachse gegeben ist, die parallel zur Auflageebene und/oder quer zur Schienenlängsrichtung verläuft.

Eine andere Weiterbildung liegt darin, dass das Verrieglungselement so übermassig ist, dass es beim Einschieben in die Verrieglungsposition die Rasthaken auseinander drückt. In diesem Fall kann das Verrieglungselement vorzugsweise auch dazu dienen, das Rastelement gegenüber einer Verschiebung längs des Schlitzes zu sichern, denn das Verrieglungselement kann hierbei aufgrund seines Übermasses die Rasthaken seitlich nach aussen gegen die Stege der Montageschiene pressen.

Zweckmässig ist es darüber hinaus, dass das Verrieglungselement zwei Stege aufweist, zwischen denen eine Ausnehmung gebildet ist. Hierdurch kann das Federverhalten des Verrieglungselements angepasst und somit die Zuverlässigkeit noch weiter verbessert werden.

Vorzugsweise ist das Rastelement U-förmig ausgebildet, insbesondere spiegelsymmetrisch. Bei einer U-Form weist das Rastelement zwei Seitenschenkel und einen Mittelschenkel auf, welcher die Seitenschenkel verbindet. Die beiden Seitenschenkel werden zweckmässigerweise von den Rasthaken gebildet.

Der Niederhalter kann bevorzugt mittels einer Schraube am Rastelement befestigt sein. Vorzugsweise weist der Niederhalter eine Durchgangsöffnung auf, durch welche die Schraube hindurchgeführt ist. Insbesondere kann die Schraube mit dem Rastelement, bevorzugt mit seinem Mittelschenkel, verschraubt sein.

Die Erfindung betrifft auch eine Tragkonstruktion für Solarpaneele, mit einer Montageschiene, welche einen von zwei vorzugsweise parallelen Stegen begrenzten Schlitz aufweist, und einer erfindungsgemässen Befestigungsvorrichtung, vorzugsweise in einer Konfiguration, bei der die Rasthaken der Befestigungsvorrichtung die beiden Stege der Montageschiene hintergreifen, bei der die Rasthaken also eingeklickt sind, und besonders bevorzugt in einer Konfiguration, bei der das Verrieglungselement in die Verrieglungsposition zwischen die beiden Rasthaken eingeschoben ist und eine Annäherung der beiden Rasthaken aneinander hemmt. Hierdurch können die im Zusammenhang mit der Befestigungsvorrichtung beschriebenen Vorteile in einer Tragkonstruktion realisiert werden.

Eine bevorzugte Weiterbildung liegt darin, dass das Verrieglungselement die beiden Rasthaken gegen die Stege der Montageschiene drückt, wenn es in die Verrieglungsposition eingeschoben ist, und/oder dass die beiden Rasthaken ein Spiel zu den Stegen haben, wenn sich das Verrieglungselement ausserhalb der Verrieglungsposition befindet. Gemäss dieser Ausgestaltung kann ein Vormontagezustand gegeben sein, solange sich das Verrieglungselement noch ausserhalb der Verrieglungsposition befindet. Denn da dann ein Spiel zwischen den eingeklickten Rasthaken und den Stegen gegeben ist, ist im Vormontagezustand zwar ein Herausziehen des eingeklickten Rastelementes aus dem Schlitz zumindest erschwert, jedoch kann das Rastelement in diesem Zustand noch im Wesentlichen frei längs des Schlitzes verschoben werden. Erst wenn das Verrieglungselement in die Verrieglungsposition gebracht ist, wird ein Verrieglungszustand erreicht, in dem das Verrieglungselement die Rasthaken seitlich an die Stege presst, und in dem die Rasthaken damit an den Stegen reibschlüssig oder auch formschlüssig gegen eine Längsverschiebung gesichert sind.

Im Vormontagezustand kann sich das Verrieglungselement insbesondere in einem Kopfbereich des Rastelements befinden, in welchem die beiden Rasthaken einen vergleichsweise grossen Abstand haben. Von hier kann dann das bereits innerhalb des Rastelements befindliche Verrieglungselement in Richtung quer zur Längserstreckung der Schiene und/oder quer zur Längserstreckung des Schlitzes zur Schiene hin in die Verrieglungsposition gebracht werden.

Weiterhin ist es bevorzugt, dass die Auflageplatte auf zumindest einer Seite, insbesondere auf gegenüberliegenden Seiten, über die Montageschiene übersteht, und zwar vorzugsweise quer zur Längsrichtung der Montageschiene und/oder ihres Schlitzes. In diesem Fall kann die Auflageplatte auch dazu dienen, die Auflagefläche für die Solarpaneele zu vergrössern. Somit können die Montageschienen mit besonders geringem Querschnitt und damit kostengünstig ausgeführt werden.

Bevorzugt ist bzw. sind zwischen dem Niederhalter und der Auflageplatte zumindest ein Solarpaneel, bevorzugt zwei Solarpaneele, angeordnet. Die Auflageplatte kann hierbei auch zum Festklemmen des zumindest einen Solarpaneels dienen, was den erforderlichen Materialaufwand reduzieren kann. Zweckmässigerweise ist das zumindest eine Solarpaneel zwischen dem Niederhalter und der Auflageplatte eingeklemmt.

Die erfindungsgemässe Befestigungsvorrichtung ist insbesondere für solche Anordnungen geeignet, bei denen sich die Montageschiene parallel zu einem der Befestigungsvorrichtung zugewandten Rand eines von der Befestigungsvorrichtung gehaltenen Solarpaneels erstreckt. Da sich bei einer solchen Anordnung wenn überhaupt nur die relativ kleine Querausdehnung und nicht die relativ grosse Längsausdehnung der Montageschiene unter die Solarpaneele erstreckt, kann die Auflagefläche der Paneele auf der Montageschiene mit einer erfindungsgemässen Auflageplatte besonders deutlich vergrössert werden.

Die Erfindung wird nachfolgend anhand bevorzugter Ausführungsbeispiele näher erläutert, die schematisch in den beiliegenden Figuren dargestellt sind. In den Figuren zeigen schematisch:
- Figur 1:: eine perspektivische Darstellung einer erfindungsgemässen Tragkonstruktion mit einer erfindungsgemässen Befestigungsvorrichtung und dem Verrieglungselement in der Verrieglungsposition, wobei der Übersichtlichkeit halber nur ein Solarpaneel gezeigt ist
- Figur 2:: die Tragkonstruktion aus Figur 1 mit dem Verrieglungselement in der Verrieglungsposition im Querschnitt;
- Figur 3:: die Tragkonstruktion aus Figur 1 mit dem Verrieglungselement in der Verrieglungsposition im Längsschnitt, wobei der Übersichtlichkeit halber der Niederhalter nicht gezeigt ist;
- Figur 4:: das Rastelement der Befestigungsvorrichtung aus Figur 1 in perspektivischer Darstellung;
- Figur 5:: die Auflageplatte der Befestigungsvorrichtung aus Figur 1 in perspektivischer Darstellung;
- Figur 6:: eine perspektivische Ansicht der Tragkonstruktion aus Figur 1 bei der Montage zur Illustration des Vormontagezustandes;
- Figur 7:: eine perspektivische Ansicht der Tragkonstruktion aus Figur 1 bei der Montage zur Illustration des Verrieglungszustandes mit dem Verrieglungselement in der Verrieglungsposition; und
- Figur 8:: eine perspektivische Teilansicht der Tragkonstruktion aus Figur 1.

Die Figuren zeigen ein Ausführungsbeispiel einer erfindungsgemässen Tragkonstruktion mit einer erfindungsgemässen Befestigungsvorrichtung. Die Tragkonstruktion weist eine Montageschiene 1 auf, in der ein längs der Montageschiene 1 verlaufender Schlitz 10 ausgebildet ist, welcher von zwei längs der Montageschiene verlaufenden Stegen 11 und 12 begrenzt ist. Die Montageschiene kann insbesondere stranggepresst sein und/oder über ihre Längserstreckung einen konstanten Querschnitt aufweisen.

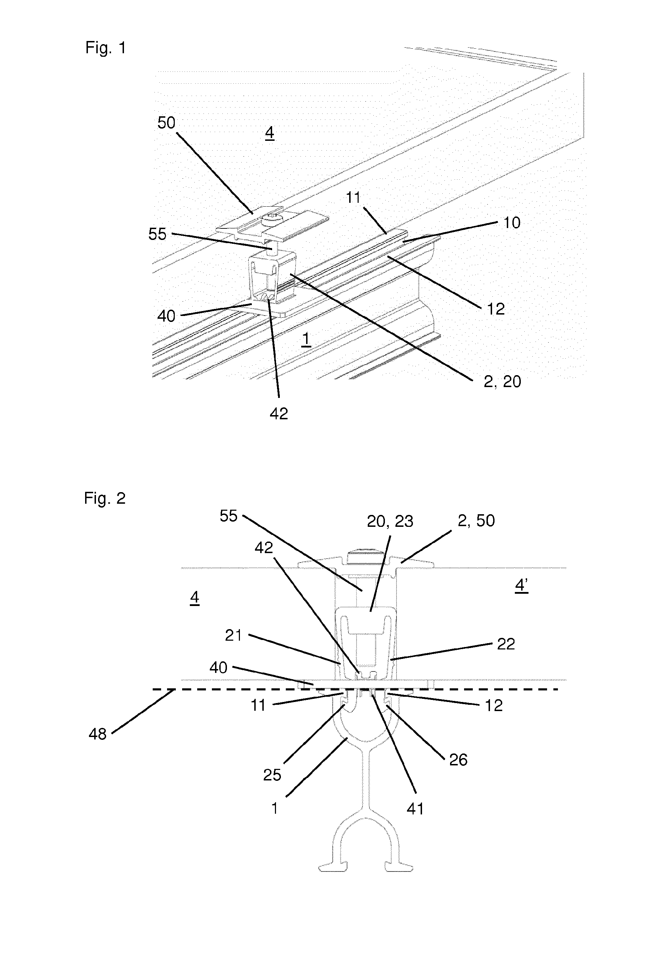

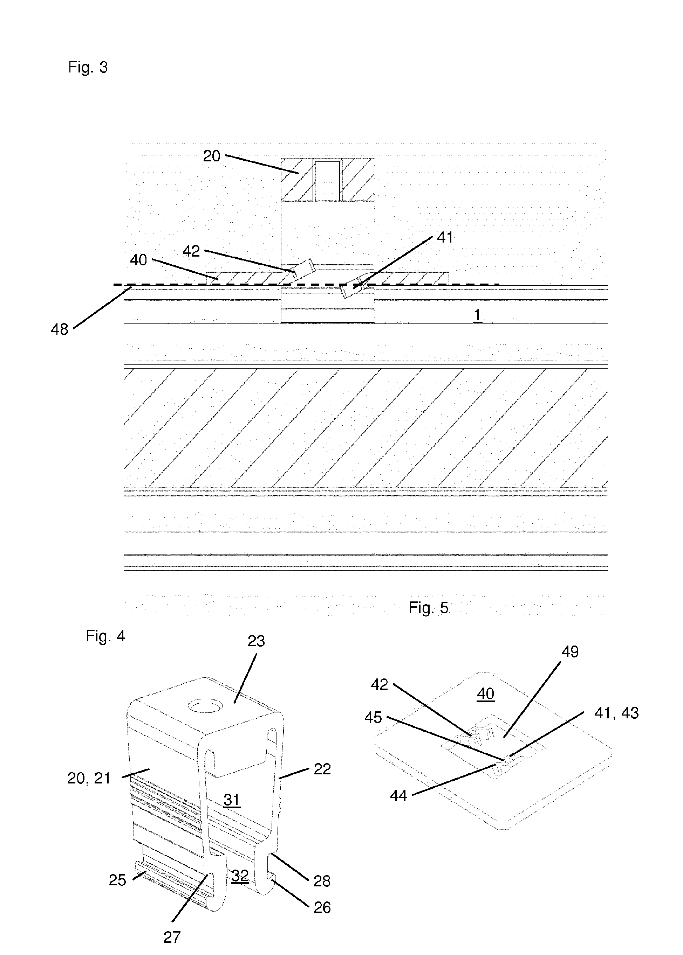

Die Tragkonstruktion weist ferner eine Befestigungsvorrichtung 2 auf, mit der zwei benachbarte Solarpaneele 4 und 4' an der Montageschiene 1 befestigt sind. Die Befestigungsvorrichtung 2 weist ein Rastelement 20 mit zwei benachbarten Rasthaken 21 und 22 auf, die über einen Mittelschenkel 23 verbunden sind. Die Rasthaken 21 und 22 und der Mittelschenkel 23 bilden dabei einen U-förmigen Querschnitt. Am Ende des ersten Rasthakens 21 ist eine erste Rastnase 25 vorgesehen, welche auf der Seite des ersten Rasthakens 21, der dem zweiten Rasthaken 22 abgewandt ist, vom ersten Rasthaken 21 absteht. Am Ende des zweiten Rasthakens 22 ist eine zweite Rastnase 26 vorgesehen, welche auf der Seite des zweiten Rasthakens 22, der dem ersten Rasthaken 21 abgewandt ist, vom zweiten Rasthaken 22 absteht (vgl. z.B. Fig. 4). Wie Figur 2 zeigt, hintergreifen diese wiederhakenförmigen Rastnasen 25 und 26 die Stege 11 bzw. 12 der Montageschiene 1, wenn das Rastelement 20 in den Schlitz 10 eingeklickt ist.

Wie insbesondere Figur 4 zeigt, weisen die Rasthaken 21 und 22 ferner jeweils einen Anschlagsteg 27 bzw. 28 auf. Diese Anschlagstege 27, 28 begrenzen das Einschieben des Rastelements 20 in den Schlitz 10, indem sie auf den Stegen 11 und 12 der Montageschiene 1 aufstehen. Wie Figur 4 weiter zeigt, weisen die beiden Rasthaken 21 und 22 in einem Kopfbereich 31 einen grösseren Abstand voneinander auf als in einem Sicherungsbereich 32, wobei sich der Kopfbereich 31 zwischen dem Sicherungsbereich 32 und dem Mittelschenkel 23 befindet, der Sicherungsbereich 32 näher an den Rastnasen 25, 26 angeordnet ist als der Kopfbereich 31 und der Kopfbereich näher 31 am Mittelsteg 23 angeordnet ist als der Sicherungsbereich 32.

Die Befestigungsvorrichtung 2 weist ferner eine Auflageplatte 40 auf, die insbesondere in Figur 5 dargestellt ist. Wie Figur 5 zeigt, hat die Auflageplatte 40 eine etwa rechteckige, insbesondere quadratische Grundfläche. Die Auflageplatte 40 weist mittig eine als Loch ausgeführte Ausnehmung 49 auf, mit rechteckiger, insbesondere quadratischer Grundfläche. Durch diese Ausnehmung 49 kann das Rastelement 20 durchgeführt werden.

An der Auflageplatte 40 ist ein erstes Verrieglungselement 41 vorgesehen, welches vom Rand der Ausnehmung 49 in die Projektion der Ausnehmung 49 vorsteht. Wie insbesondere die Figuren 2 und 3 zeigen, kann dieses Verrieglungselement 41 in eine Verrieglungsposition gebracht werden, in der das Verrieglungselement 41 eine Annäherung der beiden Rasthaken 21 und 22, insbesondere eine Annäherung deren Rastnasen 25 und 26, aneinander hemmt, und in der das Verrieglungselement 41 die beiden Rasthaken 21 und 22 an die Stege 11 bzw. 12 des Schlitzes 10 anpresst. In der Verrieglungsposition befindet sich das Verrieglungselement im verengten Sicherungsbereich 32 und für eine besonders hohe Anpresskraft vorzugsweise zwischen den Stegen 11 und 12 der Montageschiene 1.

Wie insbesondere Figur 5 zeigt, ist das Verrieglungselement 41 U-förmig mit einem ersten Steg 43 zur Anlage am ersten Rasthaken 21 und einem zweiten Steg 44 zur Anlage am zweiten Rasthaken 22 ausgebildet, wobei zwischen den beiden Stegen 43 und 44 eine Ausnehmung 45 vorhanden ist. Wie insbesondere die Figuren 2 und 3 zeigen, weist die Auflageplatte 40 eine Auflageebene 48 auf, die aussenseitig auf der Montageschiene 1, insbesondere auf deren Stegen 11 und 12 aufliegt, wenn sich das Verrieglungselement 41 in der Verrieglungsposition befindet. Wie insbesondere Figur 3 zeigt, steht das Verrieglungselement 41 winklig von der Auflageplatte 40 über diese Auflageebene 48 hervor.

Wie insbesondere die Figuren 3 und 5 zeigen, weist die Auflageplatte 40 zusätzlich zum ersten Verrieglungselement 41 auch ein weiteres Verrieglungselement 42 auf, welches auf einem gegenüberliegenden Seite der Ausnehmung 49 angeordnet ist, und welches auf einer gegenüberliegenden Flachseite der Auflageplatte 40 von der Auflageplatte 40 vorsteht. Das zweite Verrieglungselement 42 ist analog dem ersten Verrieglungselement 41 mit zwei Stegen und einer mittigen Ausnehmung ausgeführt. Die Auflageplatte 40 ist im Wesentlichen symmetrisch, insbesondere achssymmetrisch ausgebildet, vorzugsweise bezüglich einer Achse, die parallel zur Auflageebene 48 verläuft.

Die Befestigungsvorrichtung 2 weist auch eine Schraube 55 sowie einen Niederhalter 50 auf, wobei die Schraube 55 durch den Niederhalter 50 hindurchgeführt ist und der Kopf der Schraube 55 den Niederhalter 50 an der Schraube 55 sichert. Die Schraube 55 ist in das Rastelement 20 eingeschraubt, insbesondere in den Mittelschenkel 23 des Rastelements 20. Im Niederhalter 50 ist die Schraube 55 vorzugsweise frei drehbar.

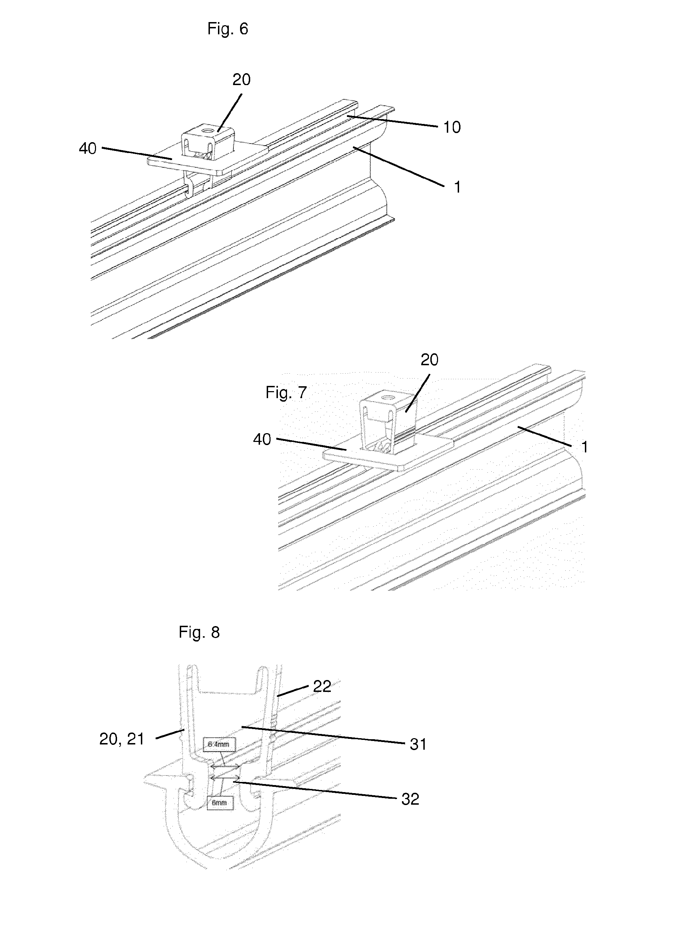

Die Montage der Befestigungsvorrichtung 2 an der Montageschiene 1 ist in den Figuren 6 und 7 dargestellt. Zunächst wird das Rastelement 20 in die Auflageplatte 40 eingeführt und das Rastelement 20 zusammen mit der Auflageplatte 40 wie in Figur 6 dargestellt in den Schlitz 10 der Montageschiene 1 eingeklickt. Die Auflageplatte 40 befindet sich dabei noch in einer Vormontageposition, in der sich die beiden Verrieglungselemente 41 und 42 im Kopfbereich 31 befinden, wo die beiden Rasthaken 21 und 22 einen relativ grossen Abstand aufweisen. Somit werden die Rasthaken 21 und 22 in der Vormontageposition noch nicht von den Verrieglungselementen 41 und 42 beaufschlagt. Da die Rasthaken 21 und 22 mit einem gewissen Spiel zu den Stegen 11 und 12 der Montageschiene 1 ausgeführt sind, kann der Monteur das Rastelement 20 in diesem Vormontagezustand noch relativ frei längs der Montageschiene 1 verschieben.

Sobald sich das Rastelement 20 in der gewünschten Endposition befindet, drückt der Monteur die Auflageplatte 40 nach unten auf die Montageschiene 1 in die in Figur 7 dargestellte Stellung. In dieser Verrieglungsstellung gelangt das Verrieglungselement 41 entsprechend Figur 2 in seine Verrieglungsposition im Sicherungsbereich 32. In dieser Position werden die Rasthaken 21 und 22 vom Verrieglungselement 41 an die Stege 11 und 12 angepresst, so dass das Rastelement 20 gegen eine unerwünschte Verschiebung längs der Montageschiene 1 gesichert ist. Sollte das Rastelement 20 nochmals verschoben werden müssen, kann der Monteur die Auflageplatte 40 wieder in die in Fig. 6 gezeigte Vormontageposition anheben.

Wenn sich Rastelement 20 in der korrekten Position an der Montageschiene 1 befindet, werden die Solarpaneele 4 und 4', die insbesondere Photovoltaikpaneele sein können, wie in den Figuren 1 und 2 gezeigt auf die Auflageplatte 40 aufgelegt. Sodann wird der Niederhalter 50 mit der Schraube 55 am Rastelement 20 befestigt und durch Anziehen der Schraube 55 werden die Solarpaneele 4 und 4' zwischen dem Niederhalter 50 einerseits und der Montageschiene 1 mit der Auflageplatte 40 andererseits eingeklemmt und damit an der Montageschiene 1 festgelegt. Da die Solarpaneele 4 und 4' nun auf die Auflageplatte 40 drücken, kann die Auflageplatte 40 nicht mehr ohne weiteres in die Vormontageposition der Figur 6 zurück gelangen, dass heisst es ist Selbstsicherungsmechanismus gegeben.

Da die Auflageplatte 40 wie insbesondere in Figur 2 erkennbar in Querrichtung über die Montageschiene 1 übersteht, ist die für die Solarpaneele 4 und 4' zur Verfügung stehende Auflagefläche nicht durch die Schienenbreite bestimmt, und die Montageschiene 1 kann entsprechend schmal und kostengünstig gestaltet werden. Das Rastelement 20 dient auch als Abstandshalter für die benachbarten Solarpaneele 4 und 4', welcher die Annäherung der benachbarten Solarpaneele 4 und 4' auf der Auflageplatte 40 so begrenzt, dass der Niederhalter 50 von oben bereichsweise zwischen die beiden Solarpaneele 4 und 4' eingebracht werden kann.

Da die Auflageplatte 40 zwei Verrieglungselemente 41 und 42 aufweist, die auf gegenüberliegenden Seiten von der Auflageplatte 40 angeordnet sind, und da die Auflageplatte 40 vorzugsweise achssymmetrisch ausgebildet ist, hat die Auflageplatte keine ausgezeichnete Ober- oder Unterseite, und der Monteur kann die Auflageplatte 40 folglich nicht verkehrt herum anbringen.

Die Verrieglungselemente 41 und 42 sind aufgrund ihrer Formgebung, vorzugsweise aber nicht notwendigerweise aufgrund ihrer Ausnehmungen 45, gezielt leicht geschwächt. Daher können die Verrieglungselemente 41 und 42 geringfügig biegen, wenn die kombinierten Toleranzen des Rastelements 20, des Schlitzes 10 und der Auflageplatte 40 den Spalt zwischen den Rasthaken 21 und 22 im Sicherungsbereich 32 zu schmal machen. Am Ende des Sicherungsbereichs 32, der dem Kopfbereich 31 zugewandt ist, kann der Abstand der Rasthaken 21 und 22 mit zunehmendem Abstand vom Kopfbereich 31 abnehmen (z.B. von 6.4 mm auf 6 mm in Figur 8), so dass eine sichere Verrieglung auch bei Toleranzen gegeben ist.

## Patentansprüche

1. Befestigungsvorrichtung (2) zum Befestigen zumindest eines Solarpaneels (4) an einer Montageschiene (1), welche einen von zwei parallelen Stegen (11, 12) begrenzten Schlitz (10) aufweist, mit
- einem Rastelement (20) mit zwei Rasthaken (21, 22), welche unter elastischer Deformation zumindest eines Teils des Rastelements (20) in den Schlitz (10) einbringbar sind, und welche anschliessend bei Entspannung des Rastelements (20) die Stege (11, 12) der Montageschiene (1) hintergreifen können, und
- zumindest einem Niederhalter (50) für ein Solarpaneel (4), welcher mit dem Rastelement (20) verbunden ist,
**dadurch gekennzeichnet,**
**dass** zumindest ein Verrieglungselement (41, 42) vorgesehen ist, welches in eine Verrieglungsposition zwischen den beiden Rasthaken (21, 22) eingeschoben werden kann, in der das Verrieglungselement (41, 42) eine Annäherung der beiden Rasthaken (21, 22) aneinander hemmt.

2. Befestigungsvorrichtung (2) nach Anspruch 1,
**dadurch gekennzeichnet,**
**dass** eine Auflageplatte (40) zur Auflage auf der Montageschiene (1) vorgesehen ist, und dass das Verrieglungselement (41, 42) an der Auflageplatte (40) angeordnet ist.

3. Befestigungsvorrichtung (2) nach Anspruch 2,
**dadurch gekennzeichnet,**
**dass** die Auflageplatte (40) zumindest eine Ausnehmung (49), insbesondere einen Einschnitt oder ein Loch aufweist, welche das Rastelement (20) umgibt, insbesondere wenn sich das Verrieglungselement (41, 42) in der Verrieglungsposition befindet.

4. Befestigungsvorrichtung (2) nach Anspruch 3,
**dadurch gekennzeichnet,**
**dass** das Verrieglungselement (41, 42) in die Ausnehmung (49) ragt.

5. Befestigungsvorrichtung (2) nach einem der Ansprüche 2 bis 4,
**dadurch gekennzeichnet,**
**dass** die Auflageplatte (40) eine Auflageebene (48) zur Auflage auf der Montageschiene (1), insbesondere auf die Stege (11, 12) der Montageschiene (1), aufweist, und dass das Verrieglungselement (41, 42) von der Auflageplatte (40) über die Auflageebene (48) vorsteht.

6. Befestigungsvorrichtung (2) nach einem der vorstehenden Ansprüche,
**dadurch gekennzeichnet,**
**dass** die Auflageplatte (40) achssymmetrisch ist und zwei Verrieglungselemente (41, 42) aufweist, die auf gegenüberliegenden Seiten der Auflageplatte (40) von der Auflageplatte (40) vorstehen.

7. Befestigungsvorrichtung (2) nach einem der vorstehenden Ansprüche,
**dadurch gekennzeichnet,**
**dass** das Verrieglungselement (41, 42) so übermassig ist, dass es beim Einschieben in die Verrieglungsposition die Rasthaken (21, 22) auseinander drückt.

8. Befestigungsvorrichtung (2) nach einem der vorstehenden Ansprüche,
**dadurch gekennzeichnet,**
**dass** das Verrieglungselement (41) zwei Stege (43, 44) aufweist, zwischen denen eine Ausnehmung (45) gebildet ist.

9. Befestigungsvorrichtung (2) nach einem der vorstehenden Ansprüche,
**dadurch gekennzeichnet,**
**dass** das Rastelement (20) U-förmig ausgebildet ist, und
**dass** der Niederhalter (50) mittels einer Schraube (55) am Rastelement (20) befestigt ist.

10. Tragkonstruktion für Solarpaneele (4), mit
einer Montageschiene (1), welche einen von zwei parallelen Stegen (11, 12) begrenzten Schlitz (10) aufweist, und
einer Befestigungsvorrichtung (2) nach einem der vorstehenden Ansprüche, wobei die Rasthaken (21, 22) der Befestigungsvorrichtung (2) die beiden Stege (11, 12) der Montageschiene (1) hintergreifen.

11. Tragkonstruktion nach Anspruch 10,
**dadurch gekennzeichnet,**
**dass** das Verrieglungselement (41, 42) die beiden Rasthaken (21, 22) gegen die Stege (11, 12) der Montageschiene (1) drückt, wenn es in die Verrieglungsposition eingeschoben ist, und
**dass** die beiden Rasthaken (21, 22) ein Spiel zu den Stegen (11, 12) haben, wenn sich das Verrieglungselement (41, 42) ausserhalb der Verrieglungsposition befindet.

12. Tragkonstruktion nach einem der Ansprüche 10 oder 11,
**dadurch gekennzeichnet,**
**dass** die Auflageplatte (40) auf gegenüberliegenden Seiten über die Montageschiene (1) übersteht.

13. Tragkonstruktion nach einem der Ansprüche 10 bis 12,
**dadurch gekennzeichnet,**
**dass** zwischen dem Niederhalter (50) und der Auflageplatte (40) zumindest ein Solarpaneel (4) angeordnet ist.

14. Tragkonstruktion nach einem der Ansprüche 10 bis 13,
**dadurch gekennzeichnet,**
**dass** sich die Montageschiene (1) parallel zu einem der Befestigungsvorrichtung (2) zugewandten Rand eines von der Befestigungsvorrichtung (2) gehaltenen Solarpaneels (4) erstreckt.
